# EUROPÄISCHE PATENTSCHRIFT

(11) **EP 1 797 289 B1**
(45) Veröffentlichungstag und Bekanntmachung des Hinweises auf die Patenterteilung: **26.05.2010**
(21) Anmeldenummer: 05777716.1
(22) Anmeldetag: 19.07.2005
(51) Int. Cl.: F01N 3/20, B01D 53/90, F01P 3/20

(54) **ZUFÜHRSYSTEM FÜR EIN MEDIUM, INSBESONDERE ZUR BEHANDLUNG VON ABGASEN EINER BRENNKRAFTMASCHINE, ABGASREINIGUNGSVORRICHTUNG UND VERFAHREN ZUM BETREIBEN EINES ZUFÜHRSYSTEMS**
MEDIUM SUPPLY SYSTEM, IN PARTICULAR FOR TREATING EXHAUST GAS OF AN INTERNAL COMBUSTION ENGINE, AN EXHAUST GAS CLEANING DEVICE AND METHOD FOR OPERATING SAID SUPPLY SYSTEM
SYSTEME D'ALIMENTATION D'UN FLUIDE, EN PARTICULIER POUR LE TRAITEMENT DE GAZ D'ECHAPPEMENT D'UN MOTEUR A COMBUSTION INTERNE, DISPOSITIF D'EPURATION DE GAZ D'ECHAPPEMENT, ET PROCEDE PERMETTANT DE FAIRE FONCTIONNER UN SYSTEME D'ALIMENTATION

(30) Priorität: 28.09.2004 DE 102004046881
(43) Veröffentlichungstag der Anmeldung: 20.06.2007
(73) Patentinhaber: ROBERT BOSCH GMBH, 70442 Stuttgart (DE)
(72) Erfinder: RIPPER, Wolfgang, 70327 Stuttgart (DE); BUERGLIN, Markus, 71254 Ditzingen (DE); FLENDER, Goetz, 70435 Stuttgart (DE); MEINGAST, Ulrich, 70469 Stuttgart (DE); HEILIG, Dirk, 71254 Ditzingen (DE); MEDUNA, Dirk Von, 70469 Stuttgart (DE)
(86) Internationale Anmeldenummer: PCT/EP2005/053478
(87) Internationale Veröffentlichungsnummer: WO 2006/034891

(56) Entgegenhaltungen:
- EP-A- 1 323 918
- WO-A-03/084647
- DE-A1- 10 324 482

## Beschreibung

### Stand der Technik

Die Erfindung geht aus von einem Zuführsystem für ein Medium, insbesondere zur Behandlung von Abgasen einer Brennkraftmaschine, einer Abgasreinigungsvorrichtung und einem Verfahren zum Betreiben eines Zuführsystems nach den Oberbegriffen der unabhängigen Ansprüche.

Zur Verminderung der in einem Abgas eines Verbrennungsmotors enthaltenen Stickoxide hat sich für solche Verbrennungsmotoren, insbesondere solche mit Selbstzündung, ein Verfahren zur selektiven katalytischen Reduktion als vorteilhaft erwiesen. Bei diesem Verfahren werden die Stickoxide zusammen mit Ammoniak in einem selektiven Katalysator zu Stickstoff und Wasser umgesetzt. Das zur katalytischen Umsetzung der Stickoxide notwendige Medium, beispielsweise ein Reduktionsmittel, wird anstelle des Ammoniaks in Form einer wässrigen Harnstofflösung im Fahrzeug mitgeführt, aus der das Ammoniak durch Hydrolyse der Harnstofflösung in der jeweils zur Umsetzung benötigten Menge freigesetzt werden kann. Das Reduktionsmittel wird beim Betanken in einen separaten Vorratstank gefüllt und über eine Zuführleitung zu einer direkt am Abgasrohr angeordneten Dosiereinheit, beispielsweise einem Dosierventil, dem Abgasstrom zugeführt. Ein solches Zuführsystem ist aus dem Dokument WO 03/084 647 A1 bekannt.

Um eine einwandfreie Funktion des Dosierventils zu gewährleisten, muss dieses einerseits gekühlt werden. Auf der anderen Seite besteht in Abhängigkeit von der Harnstoffkonzentration die Gefahr des Einfrierens der wässrigen Harnstofflösung bei bestimmten Temperaturen. Das Ausdehnungsverhalten der Harnstofflösung ist ähnlich dem von Wasser. Kann sich die gefrierende Harnstofflösung nicht ausdehnen, können im Inneren von Bauteilen, welche mit der Harnstofflösung befüllt sind, unzulässig hohe Drücke auftreten, die zur Zerstörung der Bauteile führen können. Es ist bekannt, im Arbeitsraum eines Dosierventils zumindest teilweise unter Druck nachgebende Wände oder Elemente vorzusehen, die reversibel einen unter Eisbildung entstehenden Druck im Arbeitsraum kompensieren können. Bekannt ist auch die Alternative, dass wenigstens ein Bereich zwischen einer Pumpe und der Dosiereinheit entgegengesetzt zur Normalbetrieb-Förderrichtung entleerbar ist. Eine Schädigung der Dosiereinheit durch eine unerwünschte Eisbildung bei niedrigen Außentemperaturen, insbesondere ein Aufbau von überhöhten Eisdrücken in der Anordnung, ist dadurch jedoch nicht zuverlässig vermeidbar.

Damit sich das Medium nicht zu stark aufheizt, muss sichergestellt werden, dass die Wärmemenge, die an der Dosiereinheit vom Kühlmedium aufgenommen wird, wieder an die Umgebung abgegeben wird. Dies erfolgt vorzugsweise von der Dosiereinheit über eine zum Vorratstank zurückführende Rückführleitung. Problematisch dabei ist, dass der Vorratstank wärmeisoliert sein muss, um ein Einfrieren des Mediums möglichst lange zu verhindern. Außerdem müssen die Leitungen isoliert sein, damit der Auftauvorgang nach einem Einfrieren des sich in den Leitungen befindenden Mediums möglichst rasch und unter Reduzierung hoher Energieverluste realisiert werden kann. Es entsteht somit ein Zielkonflikt zwischen einer möglichst guten Isolierung im Hinblick auf das Gefrierverhalten des Mediums und einer möglichst geringen Isolierwirkung, um eine Wärmeabfuhr zu gewährleisten.

### Vorteile der Erfindung

Die Erfindung geht aus von einem Zuführsystem für ein Medium, insbesondere für eine Abgasreinigungsvorrichtung für eine Behandlung von Abgasen einer Brennkraftmaschine, mit einem Vorratstank, und einer an dieser angeschlossenen Zuführleitung zum Zuführen des Mediums in den Vorratstank.

Es wird vorgeschlagen, dass eine Zuführleitung und/oder eine Rückführleitung wenigstens einen Leitungsbereich aufweist mit wenigstens einem ersten Teilkanal und einem zweiten strömungsmäßig parallel geführten zweiten Teilkanal, wobei die Teilkanäle unterschiedliche thermische Isoliereigenschaften aufweisen. Damit kann die an der Dosiereinheit aufgenommene Wärme bei gleichzeitiger Isolierung des gesamten Medium-Kreislaufs an die Umgebung abgeführt werden. Bei dem Medium handelt es sich vorzugsweise um ein bei normalen Betriebsbedingungen einfrierbares Medium, insbesondere eine wässrige Harnstofflösung. Ferner geht die Erfindung von einer Abgasreinigungsvorrichtung mit einer erfindungsgemäßen Zuführleitung sowie von einem Verfahren zum Betreiben der erfindungsgemäßen Zuführleitung aus.

Vorzugsweise weisen die beiden Teilkanäle unterschiedliche Wärmeabfuhr-Eigenschaften auf, insbesondere sind die beiden Teilkanäle in ihrer thermischen Isolierung stark unterschiedlich ausgebildet. Der zweigeteilte Leitungsbereich ist vorzugsweise in einem Bereich einer Rückführleitung zwischen einer Dosiereinheit und einem Vorratstank angeordnet. Vorteilhafterweise ist einer der Teilkanäle wärmeisolierungsfrei, während der andere Teilkanal isoliert sein kann. Es kann vorgesehen sein, dass das zurückströmende Medium nach einem ersten Startvorgang der Brennkraftmaschine in den ersten, wärmeisolierten Teilkanal der Rückführleitung zuleitbar ist. Vorteilhafterweise wird dadurch der Auftauvorgang von eingefrorenen Leitungen nach dem Motorstart beschleunigt. Nach deren Auftauvorgang kann das zurückströmende Medium in den zweiten, nicht isolierten Teilkanal der Rückführleitung zuleitbar sein. Der Hauptstrom des Mediums kann somit zeitlich versetzt durch den zweiten Teilkanal geleitet werden, um die erwünschte Wärmeabfuhr sicherzustellen. Als geeignetes Kühlmedium, das ein Überhitzen des Mediums vermeiden kann, ist dabei das Medium selbst einsetzbar, denn dieses muss ohnehin der Dosiereinheit zugeführt werden.

Um den Auftauvorgang von eingefrorenen Leitungen nach dem Starten des Motors zu beschleunigen und den Förderkreislauf sicherzustellen, können die Zuführleitung und die Rückführleitung elektrisch beheizbar sein. In einer bevorzugten Ausführungsform sind der erste und zweite Teilkanal getrennt beheizbar, wobei der zweite, nicht isolierte Teilkanal zunächst von der Heizung ausgenommen sein kann, um die Heizleistung zu begrenzen oder den Auftauvorgang des ersten Telkanals zu beschleunigen. Bei dieser Ausführungsform wird der zweite Teilkanal erst nach dem Auftauen des ersten Teilkanals beheizt, um so zeitlich verzögert dessen Auftauvorgang zu beschleunigen. Die Beheizung des ersten Teilkanals wird dann abgeschaltet. Sobald der zweite Teilkanal aufgetaut ist, kann dessen Beheizung abgeschaltet werden. Der Hauptstrom des Mediums kann nunmehr durch den zweiten Teilkanal fließen, wobei die erwünschte Wärmeabfuhr vorzugsweise durch den zweiten Teilkanal stattfinden kann.

Ein Zuführen des Mediums in nur einen der Teilkanäle oder ein mengenmäßiges Aufteilen des Mediums auf den ersten und den zweiten Teilkanal ist in einer bevorzugten Ausführungsform der Erfindung steuerbar. Hierfür sind vorzugsweise unterschiedliche Maßnahmen und Vorrichtungen an einer Verzweigungsstelle vorgesehen, an der sich ein erster Teilbereich der Rückführleitung in den ersten und den zweiten Teilkanal verzweigt, und/oder an einer Verbindungsstelle, wo der erste und der zweite Teilkanal in einem zweiten Teilbereich der Rückführleitung wieder zusammenlaufen.

Das Zuführen oder Aufteilen kann durch einen Anströmwinkel zwischen einer ersten Hauptströmungsrichtung in einem ersten Teilbereich der Rückführleitung und dem ersten und/oder dem zweiten Teilkanal einstellbar sein. Vorzugsweise kann das Zuführen oder Aufteilen durch ein Größenverhältnis von einem ersten Anströmwinkel und einem zweiten Anströmwinkel gesteuert werden. Der erste Anströmwinkel ist zwischen einer ersten Hauptströmungsrichtung in einem ersten Teilbereich der Rückführleitung vor der Verzweigungsstelle und einer Einströmungsrichtung in den ersten Teilkanal angeordnet. Der zweite Anströmwinkel liegt zwischen der ersten Hauptströmungsrichtung in dem ersten Teilbereich der Rückführleitung und einer Hauptströmungsrichtung in dem zweiten Teilkanal. Der zweite Anströmwinkel ist dabei vorzugsweise kleiner als der erste Anströmwinkel, wobei der zweite Anströmwinkel bevorzugt 10°, und der erste Anströmwinkel bevorzugt mindestens 80° beträgt. In einer besonders bevorzugten Ausführungsform der erfindungsgemäßen Abgasvorrichtung betragen der zweite Anströmwinkel 0°, und der erste Anströmwinkel 90°. Dies hat den Vorteil, dass der Hauptstrom des Mediums in der Rückführleitung aufgrund der Masseträgheit und der vorhandenen Strömungsgeschwindigkeit durch den zweiten Teilkanal strömt. Die Winkelangaben beziehen sich dabei jeweils auf die Einbaulage im Fahrzeug.

Ferner kann das Zuführen oder Aufteilen durch einen Abströmwinkel zwischen einer zweiten Hauptströmungsrichtung in einem zweiten Teilbereich der Rückführleitung und dem ersten und/oder dem zweiten Teilkanal einstellbar ist. Vorzugsweise ist das Zuführen oder Aufteilen durch ein Größenverhältnis von einem ersten und zweiten Abströmwinkel steuerbar. Der erste Abströmwinkel liegt zwischen einer zweiten Hauptströmungsrichtung in einem zweiten Teilbereich der Rückführleitung nach der Verbindungsstelle und einer Ausströmungsrichtung aus dem ersten Teilkanal. Der zweite Abströmwinkel ist zwischen der Hauptströmungsrichtung in dem zweiten Teilbereich der Rückführleitung und der zweiten Hauptströmungsrichtung in dem zweiten Teilkanal angeordnet. Der erste Abströmwinkel ist dabei vorzugsweise kleiner als der zweite Abströmwinkel, wobei der erste Abströmwinkel bevorzugt höchsten 10°, und der zweite Anströmwinkel bevorzugt mindestens 80° beträgt. In einer besonders bevorzugten Ausführungsform der erfindungsgemäßen Abgasvorrichtung weist der zweite Abströmwinkel eine Dimensionierung von 0° auf, und der erste Abströmwinkel eine Dimensionierung von 90°. Dadurch kann günstigerweise eine Durchströmung des Mediums durch den zweiten Teilkanal erzielt werden.

Ein Zuführen oder Ableiten des Mediums durch den ersten oder den zweiten Teilkanal kann auch durch Vorrichtungen und Maßnahmen realisiert werden, die an anderen Stellen als im Bereich der Verzweigungsstelle und der Verbindungsstelle vorgesehen sind. Insbesondere kann das in den Vorratstank zurückströmende Medium in den ersten und/oder zweiten Teilkanal der Rückführleitung durch unterschiedliche Strömungsquerschnitte der Teilkanäle einstellbar sein. Insbesondere kann ein erster Strömungsquerschnitt des ersten Teilkanals kleiner sein als ein zweiter Strömungsquerschnitt des zweiten Teilkanals, wodurch vorteilhafterweise das Zuführen oder Ableiten des Mediums in den zweiten Teilkanal mit dem größeren zweiten Strömungsquerschnitt eingestellt wird, nachdem das gefrorene Medium in diesem zweiten Teilkanal aufgetaut ist. Es können auch eine oder mehrere Verengungen, beispielsweise in Form von Drosseln, in dem ersten Teilkanal vorgesehen sein, um ein gerichtetes Umleiten des Hauptstroms des Mediums in den zweiten Teilkanal zu erreichen.

Ferner kann das Zuführen oder Ableiten des Mediums durch ein Ventil, beispielsweise durch ein Absperrventil gesteuert werden. Es kann dabei insbesondere an der Verzweigungsstelle und/oder an der Verbindungsstelle und/oder in dem ersten Teilkanal jeweils ein Thermostatventil vorgesehen sein. Dieses kann bei einer bestimmten Temperatur, beispielsweise bei 60°C, ein Öffnen des zweiten Teilkanals und ein Verschließen des ersten Teilkanals für das durch die Leitungen strömende Medium regeln.

Um eine besonders effiziente Wärmeabfuhr im Bereich des zweiten Teilkanals zu erzielen, kann dieser in Einbaulage in einem Bereich seiner Längserstreckung quer zum Staudruck des Fahrtwindes angeordnet sein. Dadurch wird eine möglichst große Oberfläche des zweiten Teilkanals dem Fahrtwind ausgesetzt, wodurch die Wärmeabfuhr zusätzlich unterstützt werden kann.

Ferner kann der zweite Teilkanal zusätzliche aktive Kühlungsvorrichtungen aufweisen, beispielsweise in Form von seitlich zum zweiten Teilkanal angeordneten Leitblechen, die für eine Nachfuhr von kühler Luft sorgen. Diese Ausführungsform kann insbesondere dann von Vorteil sein, wenn der zweite Teilkanal nicht quer zum Staudruck des Fahrtwindes angeordnet ist, sondern in einem anderen Winkel, und insbesondere parallel zum Fahrtwind. Der zweite Teilkanal kann auch mit Kühlrippen versehen sein, um die Wärmeabfuhr zu erhöhen. Es ist auch die Anordnung jeder anderen aktiven Kühlungsvorrichtung mit einer vergleichbaren Wirkung denkbar.

### Zeichnungen

Die Erfindung wird nachfolgend in einem Ausführungsbeispiel anhand der zugehörigen Zeichnungen näher erläutert.

Es zeigen:
- Fig. 1: schematisch eine bevorzugte Zuführsystem in einem Abgasstrang eines Fahrzeugs; und
- Fig. 2: eine vergrößerte Teilansicht der schematischen Darstellung nach Figur 1.

### Beschreibung der Ausführungsbeispiele

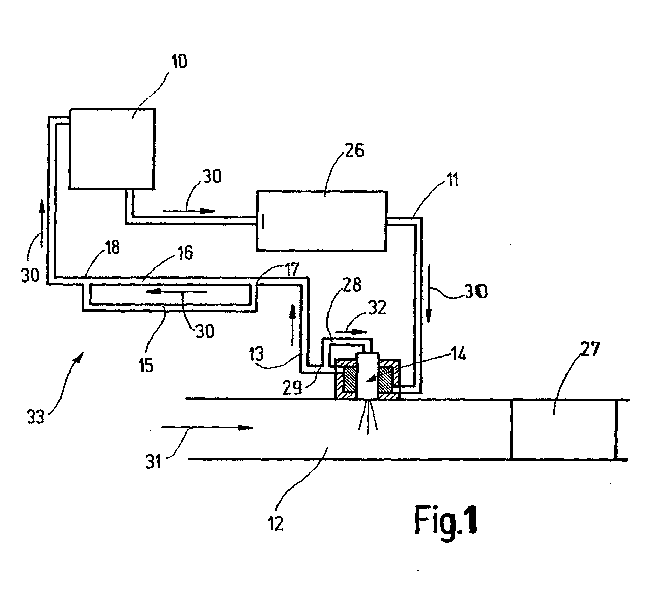

Ein bevorzugtes Zuführsystem für ein Medium, insbesondere zur Behandlung von Abgasen einer Brennkraftmaschine, ist vereinfacht in Figur 1 dargestellt. In einem Vorratstank 10 ist ein Medium, vorzugsweise ein bei normalen Betriebsbedingungen einfrierbares Medium, beispielsweise eine wässrige Harnstofflösung, als Reduktionsmittel zur Reinigung von Abgasen eines Verbrennungsmotors gespeichert, welches über eine Pumpe 26 und eine Zuführleitung 11 in eine Dosiereinheit 14 einbringbar ist. Die Pumpe 26 fördert das Medium in eine durch einen Pfeil gekennzeichnete Normalbetrieb-Förderrichtung 30 zu der Dosiereinheit 14, welche das Medium direkt in eine Abgasleitung 12 abgibt. Zur Abgasreinigung wird das Medium über die Abgasleitung 12 in einen Katalysator 27 eingebracht. Eine Abgasströmungsrichtung 31 in der Abgasleitung 12 ist durch einen Pfeil gekennzeichnet. Von der Dosiereinheit 14 wird das überschüssige Medium über eine Rückführleitung 13 in den Vorratstank 10 in die durch einen Pfeil gekennzeichnete Normalbetrieb-Förderrichtung 30 zurückbefördert.

Gemäß einer bevorzugten Ausgestaltung der Erfindung weist die Zuführleitung 11 und/oder die Rückführleitung 13 wenigstens einen Leitungsbereich 33 auf mit wenigstens einem ersten Teilkanal 15 und einem zweiten strömungsmäßig parallel geführten zweiten Teilkanal 16, wobei die Teilkanäle 15, 16 unterschiedliche thermische Isoliereigenschaften aufweisen. Die Teilkanäle 15, 16 weisen dabei insbesondere unterschiedliche Wärmeabfuhr-Eigenschaften auf.

An einer Verzweigungsstelle 17 teilt sich die Rückführleitung 13 in die zwei Teilkanäle 15, 16 auf, die sich wieder an einer Verbindungsstelle 18 verbinden. Erfindungsgemäß ist nur einer der Teilkanäle 15, 16 wärmeisolierungsfrei. In der Figur 1 ist nur der zweite Teilkanal 16 wärmeisolierungsfrei. Nach einem ersten Startvorgang der Brennkraftmaschine ist das zurückströmende Medium in den ersten, wärmeisolierten Teilkanal 15 der Rückführleitung 13 zuleitbar. Vorteilhafterweise wird dadurch der Auftauvorgang von eingefrorenen Leitungen nach dem Motorstart beschleunigt. Nach deren Auftauvorgang kann das zurückströmende Medium in den zweiten, nicht isolierten zweiten Teilkanal 16 der Rückführleitung 13 zuleitbar sein. Der Hauptstrom des Mediums kann somit zeitlich versetzt durch den zweiten Teilkanal geleitet werden, um die erwünschte Wärmeabfuhr sicherzustellen.

Erfindungsgemäß sind der erste und zweite Teilkanal 15, 16 getrennt beheizbar, wobei der zweite, nicht isolierte Teilkanal 16 zunächst von der Heizung ausgenommen ist, um die Heizleistung zu begrenzen. Bei der bevorzugten Ausführungsform wird der zweite Teilkanal 16 erst nach dem Auftauen des ersten Teilkanals 15 beheizt, um so zeitlich verzögert dessen Auftauvorgang zu beschleunigen. Die Beheizung des ersten Teilkanals 15 wird dann abgeschaltet. Sobald der zweite Teilkanal 16 aufgetaut ist, kann dessen Beheizung abgeschaltet werden. Der Hauptstrom des Mediums kann nunmehr durch den zweiten Teilkanal 16 fließen, wobei dann die erwünschte Wärmeabfuhr vorzugsweise durch den zweiten Teilkanal 16 stattfindet.

Eine zusätzliche Wärmeabfuhr wird durch einen dritten, zu der Rückführleitung 13 parallel geführten Teilkanal 28 erzielt, der stromabwärts zwischen der Dosiereinheit 14 und der Verzweigungsstelle 17 angeordnet ist. Der dritte Teilkanal 28 dient der Zuleitung des Mediums in die Dosiereinheit 14, die zum Wärmeabtransport vom Medium umspült wird. Durch den dritten Teilkanal 28 fließt eine einzudosierende Menge des Mediums. In einer alternativen Ausführungsform, die in der Figur 1 nicht gezeigt ist, kann die Leitung 28 auch direkt von der Leitung 11 in die Dosiereinheit 14 abzweigen.

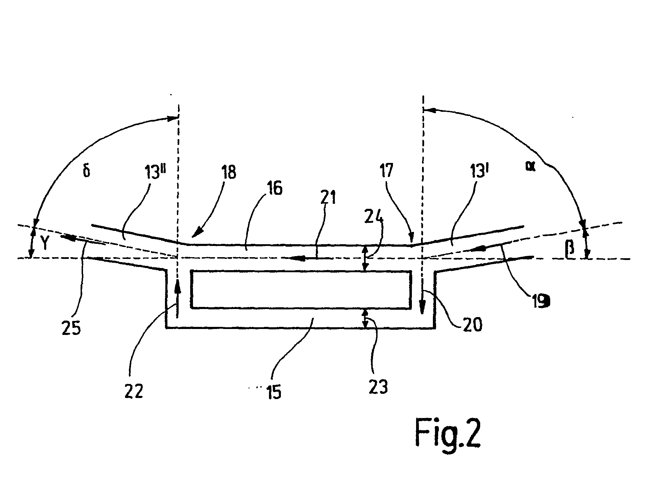

In der Figur 2 ist eine vergrößerte Teilansicht der schematischen Darstellung nach Figur 1 dargestellt. Gleiche oder im Wesentlichen gleich bleibende Elemente werden in den Figuren mit den gleichen Bezugszeichen beziffert. Die parallel geführten Teilkanäle 15, 16 verzweigen sich in einem ersten Teilbereich 13' der Rückführleitung an der Verzweigungsstelle 17 und verbinden sich wieder an einer in einem zweiten Teilbereich 13" der Rückführleitung 13 angeordneten Verbindungsstelle 18.

Ein Zuführen des Mediums in nur einen der Teilkanäle 15, 16 oder ein mengenmäßiges Aufteilen des Mediums auf den ersten und den zweiten Teilkanal ist steuerbar. Erfindungsgemäß ist das Zuführen oder Aufteilen des Mediums durch verschiedene Maßnahmen und Vorrichtungen einstellbar, wobei das zurückströmende Medium nach einem ersten Startvorgang der Brennkraftmaschine vorzugsweise zunächst in den ersten, wärmeisolierten Teilkanal 15 der Rückführleitung 13 zugeführt wird. Erst nachdem der zweite, nicht isolierte Teilkanal 16 der Rückführleitung 13 aufgetaut ist, wird das Medium in diesen zweiten Teilkanal 16 geleitet.

Das Zuführen oder Aufteilen des Hauptstroms des Mediums kann durch einen Anströmwinkel α, β einstellbar sein, und zwar insbesondere durch ein Größenverhältnis von einem ersten Anströmwinkel α und einem zweiten Anströmwinkel β. Der erste Anströmwinkel α ist zwischen einer ersten Hauptströmungsrichtung 19 in einem ersten Teilbereich 13' der Rückführleitung 13 vor der Verzweigungsstelle und einer Einströmungsrichtung 20 in den ersten Teilkanal 15 angeordnet. Der zweite Anströmwinkel β liegt zwischen der ersten Hauptströmungsrichtung 19 in dem ersten Teilbereich 13' der Rückführleitung 13 und einer zweiten Hauptströmungsrichtung 21 in den zweiten Teilkanal 16. In der Figur 2 ist der zweite Anströmwinkel β kleiner als der erste Anströmwinkel α, wobei der zweite Anströmwinkel β beispielsweise 10°, und der erste Anströmwinkel α beispielsweise 80° beträgt.

Das Zuführen oder Aufteilen des Mediums in den ersten und/oder zweiten Teilkanal 15, 16 der Rückführleitung 13 kann ferner durch einen Abströmwinkel γ, δ eingestellt werden, und zwar insbesondere durch ein Größenverhältnis zwischen dem ersten Abströmwinkel γ und dem zweiten Abströmwinkel δ. Dabei ist der erste Abströmwinkel γ zwischen einer zweiten Hauptströmungsrichtung 25 in einem zweiten Teilbereich 13" der Rückführleitung 13 nach der Verbindungsstelle 18 und einer Ausströmungsrichtung 22 aus den ersten Teilkanal 15 angeordnet. Der zweite Abströmwinkel δ liegt zwischen der zweiten Hauptströmungsrichtung 25 in dem zweiten Teilbereich 13" der Rückführleitung 13 und der Hauptströmungsrichtung 21 in dem zweiten Teilkanal 16. Gemäß einer bevorzugten Ausgestaltung der Erfindung ist der erste Abströrnwinkel γ kleiner als der zweite Abströmwinkel δ, wobei der erste Abströmwinkel γ in der Figur 2 beispielsweise 10° beträgt, und der zweite Abströmwinkel δ beispielsweise 80°.

Ferner kann das Zuführen oder Aufteilen des in den Vorratstank 10 zurückströmenden Mediums in den ersten und/oder zweiten Teilkanal 15, 16 der Rückführleitung 13 durch unterschiedliche Strömungsquerschnitte 23, 24 des ersten und zweiten Teilkanals 15, 16 eingestellt werden. Erfindungsgemäß ist der erste Strömungsquerschnitt 23 des ersten Teilkanals 15 kleiner ist als der zweite Strömungsquerschnitt 24 des zweiten Teilkanals 16. Dadurch wird ein Zuführen oder Aufteilen des Mediums in den zweiten Teilkanal 16 nach dessen Auftauen gesteuert.

Es kann auch vorgesehen sein, dass der erste Teilkanal 15 eine Verengung, beispielsweise eine Drossel, aufweist. Ferner kann das Zuführen oder Aufteilen durch ein Absperrventil gesteuert werden. An der Verzweigungsstelle 17 und/oder an der Verbindungsstelle 18 und/oder in dem ersten Teilkanal 15 kann beispielsweise jeweils ein Thermostatventil angeordnet sein. Diese Vorrichtungen sind in den Figuren nicht dargestellt.

Der zweite Teilkanal 16 der Rückführleitung 13 kann auch in Einbaulage in einem Bereich seiner Längserstreckung quer zum Staudruck des Fahrtwindes angeordnet sein. Außerdem kann der zweite Teilkanal 16 weitere aktive Kühlungsvorrichtungen, beispielsweise in Form von Leitblechen oder Kühlrippen aufweisen, um den Kühlvorgang zu unterstützen.

## Patentansprüche

1. Zuführsystem für ein Medium, insbeso ndere für eine Abgasreinigungsvorrichtung für eine Behandlung von Abgasen einer Brennkraftmaschine, mit einem Vorratstank (10), einer an diesen angeschlossenen Zuführleitung (11) zum Zuführen des Mediums zu einer mit einer Abgasleitung (12) verbundenen Dosiereinheit (14) und einer Rückführleitung (13) zum Rückführen des Mediums in den Vorratstank (10), **dadurch gekennzeichnet, dass** die Zuführleitung (11) und/oder die Rückführleitung (13) wenigstens einen Leitungsbereich (33) aufweist mit wenigstens einem ersten Teilkanal (15) und einem zweiten strömungsmäßig parallel geführten zweiten Teilkanal (16), wobei die Teilkanäle (15, 16) unterschiedliche thermische Isoliereigenschaften aufweisen.

2. Zuführsystem nach Anspruch 1, **dadurch gekennzeichnet, dass** die Teilkanäle (15, 16) unterschiedliche Wärmabfuhr-Eigenschaften aufweisen.

3. Zuführsystem nach Anspruch 1 oder 2, **dadurch gekennzeichnet, dass** einer der Teilkanäle (15, 16) wärmeisolierungsfrei ist.

4. Zuführsystem nach einem der Ansprüche 1 bis 3, **dadurch gekennzeichnet, dass** der erste und der zweite Teilkanal (15, 16) getrennt beheizbar sind.

5. Zuführsystem nach einem der vorhergehenden Ansprüche, **dadurch gekennzeichnet, dass** ein Zuführen des Mediums in nur einen der Teilkanäle (15, 16) oder ein mengenmäßiges Aufteilen des Mediums auf den ersten und den zweiten Teilkanal steuerbar ist.

6. Zuführsystem nach einem der vorhergehenden Ansprüche, **dadurch gekennzeichnet, dass** das in den Vorratstank (10) zurückströmende Medium nach einem ersten Startvorgang der Brennkraftmaschine in den ersten, wärmeisolierten Teilkanal (15) der Rückführleitung (13) zuleitbar ist.

7. Zuführsystem nach einem der Ansprüche 5 bis 6, **dadurch gekennzeichnet, dass** das Zuführen oder Aufteilen durch einen Anströmwinkel (α, β) zwischen einer ersten Hauptströmungsrichtung (19) in einem ersten Teilbereich (13') der Rückführleitung (13) und dem ersten und/oder dem zweiten Teilkanal (15, 16) einstellbar ist.

8. Zuführsystem nach einem der Ansprüche 5 bis 7, **dadurch gekennzeichnet, dass** das Zuführen oder Aufteilen durch einen Abströmwinkel (γ, δ) zwischen einer zweiten Hauptströmungsrichtung (25) in einem zweiten Teilbereich (13") der Rückführleitung (13) und dem ersten und/oder dem zweiten Teilkanal (15, 16) einstellbar ist.

9. Zuführsystem nach einem der Ansprüche 5 bis 8, **dadurch gekennzeichnet, dass** das Zuführen oder Aufteilen durch unterschiedliche Strömungsquerschnitte (23, 24) der Teilkanäle (15, 16) einstellbar ist.

10. Zuführsystem nach einem der Ansprüche 5 bis 9, **dadurch gekennzeichnet, dass** zum Zuführen oder Aufteilen ein Ventil in einem der Teilkanäle (15, 16) vorgesehen ist.

11. Abgasreinigungsvorrichtung **dadurch gekennzeichnet, dass** ein Zuführsystem nach den Ansprüchen 1 bis 10 vorgesehen ist.

12. Verfahren zum Betreiben eines Zuführsystems für ein Medium, insbesondere für eine Abgasreinigungsvorrichturg für eine, Behandlung von Abgasen einer Brennkraftmaschine, mit einem Vorratstank (10), einer an diesen angeschlossenen Zuführleitung (11) zum Zuführen des Mediums zu einer mit einer Abgasleitung (12) verbundenen Dosiereinheit (14) und einer Rückführleitung (13) zum Rückführen des Mediums in den Vorratstank (10), **dadurch gekennzeichnet, dass** ein Hauptstrom eines Mediums nach einem ersten Startvorgang einer Brennkraftmaschine in einen ersten, wärmeisolierten Teilkanal (15) einer Rückführleitung (16) zugeleitet wird, und wobei nach einem Auftauvorgang der Hauptstrom des Mediums in einen zweiten, parallelen, wärmeisolierungsfreien Teilkanal (16) zugeleitet wird.

## Claims

1. Supply system for a medium, in particular for an exhaust-gas purification device for the treatment of exhaust gases of an internal combustion engine, having a storage tank (10), having a supply line (11), which is connected to said storage tank (10), for supplying the medium to a dosing unit (14) which is connected to an exhaust line (12), and having a return line (13) for returning the medium into the storage tank (10), **characterized in that** the supply line (11) and/or the return line (13) has at least one line region (33) with at least one first partial duct (15) and one second partial duct (16) which extends parallel thereto in terms of flow, with the partial ducts (15, 16) having different thermal insulation properties.

2. Supply system according to Claim 1, **characterized in that** the partial ducts (15, 16) have different heat dissipation properties.

3. Supply system according to Claim 1 or 2,
**characterized in that** one of the partial ducts (15, 16) has no heat insulation.

4. Supply system according to one of Claims 1 to 3, **characterized in that** the first and second partial ducts (15, 16) can be heated separately.

5. Supply system according to one of the preceding claims, **characterized in that** a supply of the medium into only one of the partial ducts (15, 16) or a quantitative division of the medium between the first and second partial ducts can be controlled.

6. Supply system according to one of the preceding claims, **characterized in that** the medium flowing back into the storage tank (10) after a first starting process of the internal combustion engine can be conducted into the first, heat-insulated partial duct (15) of the return line (13).

7. Supply system according to either of Claims 5 and 6, **characterized in that** the supply or division can be adjusted by means of an incoming flow angle (α, β) between a first main flow direction (19) in a first partial region (13') of the return line (13) and the first and/or the second partial duct (15, 16).

8. Supply system according to one of Claims 5 to 7, **characterized in that** the supply or division can be adjusted by means of an outgoing flow angle (γ, δ) between a second main flow direction (25) in a second partial region (13") of the return line (13) and the first and/or the second partial duct (15, 16).

9. Supply system according to one of Claims 5 to 8, **characterized in that** the supply or division can be adjusted by means of different flow cross sections (23, 24) of the partial ducts (15, 16).

10. Supply system according to one of Claims 5 to 9, **characterized in that,** for the supply or division, a valve is provided in one of the partial ducts (15, 16).

11. Exhaust-gas purification device, **characterized in that** a supply system according to Claims 1 to 10 is provided.

12. Method for operating a supply system for a medium, in particular for an exhaust-gas purification device for the treatment of exhaust gases of an internal combustion engine, having a storage tank (10), having a supply line (11), which is connected to said storage tank (10), for supplying the medium to a dosing unit (14) which is connected to an exhaust line (12), and having a return line (13) for returning the medium into the storage tank (10), **characterized in that** a main flow of a medium after a first starting process of an internal combustion engine is conducted into a first, heat-insulated partial duct (15) of a return line (13), and wherein after a thawing process, the main flow of the medium is conducted into a second, parallel, non-heat-insulated partial duct (16).

## Revendications

1. Système d'alimentation en fluide, en particulier pour un dispositif de purification des gaz d'échappement pour un traitement de gaz d'échappement d'un moteur à combustion interne, comprenant un réservoir (10), une conduite d'alimentation (11) raccordée à celui-ci, pour l'alimentation du fluide à une unité de dosage (14) connectée à une conduite de gaz d'échappement (12) et une conduite de retour (13) pour ramener le fluide dans le réservoir (10), **caractérisé en ce que** la conduite d'alimentation (11) et/ou la conduite de retour (13) présentent au moins une région de conduite (33) avec au moins un premier canal partiel (15) et un deuxième canal partiel (16) guidé parallèlement à l'écoulement, les canaux partiels (15, 16) présentant des propriétés d'isolation thermique différentes.

2. Système d'alimentation selon la revendication 1, **caractérisé en ce que** les canaux partiels (15, 16) présentent des propriétés de dissipation de la chaleur différentes.

3. Système d'alimentation selon la revendication 1 ou 2, **caractérisé en ce que** l'un des canaux partiels (15, 16) n'a pas d'isolation thermique.

4. Système d'alimentation selon l'une quelconque des revendications 1 à 3, **caractérisé en ce que** le premier et le deuxième canal partiel (15, 16) peuvent être chauffés séparément.

5. Système d'alimentation selon l'une quelconque des revendications précédentes, **caractérisé en ce qu'**une alimentation en fluide peut être commandée dans seulement l'un des canaux partiels (15, 16) ou une division quantitative du fluide en le premier et le deuxième canal partiel peut être commandée.

6. Système d'alimentation selon l'une quelconque des revendications précédentes, **caractérisé en ce que** le fluide revenant dans le réservoir (10) peut être acheminé après une première opération de démarrage du moteur à combustion interne dans le premier canal partiel à isolation thermique (15) de la conduite de retour (13).

7. Système d'alimentation selon l'une quelconque des revendications 5 à 6, **caractérisé en ce que** l'alimentation ou la division peut être ajustée par un angle d'afflux (α, β) entre une première direction d'écoulement principale (19) dans une première région partielle (13') de la conduite de retour (13) et le premier et/ou le deuxième canal partiel (15, 16).

8. Système d'alimentation selon l'une quelconque des revendications 5 à 7, **caractérisé en ce que** l'alimentation ou la division peut être ajustée par un angle d'écoulement (γ, δ) entre une deuxième direction d'écoulement principale (25) dans une deuxième région partielle (13") de la conduite de retour (13) et le premier et/ou le deuxième canal partiel (15, 16).

9. Système d'alimentation selon l'une quelconque des revendications 5 à 8, **caractérisé en ce que** l'alimentation ou la division peut être ajustée par différentes sections transversales d'écoulement (23, 24) des canaux partiels (15, 16).

10. Système d'alimentation selon l'une quelconque des revendications 5 à 9, **caractérisé en ce que** pour l'alimentation ou la division, on prévoit une soupape dans l'un des canaux partiels (15, 16).

11. Dispositif de purification des gaz d'échappement, **caractérisé en ce que** l'on prévoit un système d'alimentation selon les revendications 1 à 10.

12. Procédé pour faire fonctionner un système d'alimentation en fluide, notamment en particulier pour un dispositif de purification des gaz d'échappement pour un traitement de gaz d'échappement d'un moteur à combustion interne, comprenant un réservoir (10), une conduite d'alimentation (11) raccordée à celui-ci, pour l'alimentation du fluide à une unité de dosage (14) connectée à une conduite de gaz d'échappement (12) et une conduite de retour (13) pour ramener le fluide dans le réservoir (10),
**caractérisé en ce qu'**un courant principal d'un fluide après une première opération de démarrage d'un moteur à combustion interne est acheminé dans un premier canal partiel (15) à isolation thermique d'une conduite de retour (13), et après une opération de dégivrage, le courant principal du fluide est acheminé dans un deuxième canal partiel (16) parallèle sans isolation thermique.
